# EUROPEAN PATENT APPLICATION

(11) **EP 2 565 690 A1**
(43) Date of publication of application: **06.03.2013**
(21) Application number: 12182239.9
(22) Date of filing: 29.08.2012
(51) Int. Cl.: G02B 6/00, G02F 1/1335

(54) **Illuminating device for a thin display device**

(30) Priority: 30.08.2011 JP 2011186652
(71) Applicant: Funai Electric Co., Ltd., Daito-shi Osaka 574-0013 (JP)
(72) Inventor: Mizutani, Kenji, Daito-shi, Osaka 574-0013 (JP)
(74) Representative: Grünecker, Kinkeldey, Stockmair & Schwanhäusser

(57) **Abstract**

A display device that economically improves light entry efficiency and non-uniformity of luminance of a light guide plate (4) includes a plurality of light sources (5) arranged at specified intervals so as to face a plane of incidence (4a) of the light guide plate to illuminate a liquid crystal module from the rear such that the light guide plate is illuminated with light from the light sources passing through the plane of incidence of the light guide plate. An optically anisotropic member (8) is disposed on the plane of incidence and is configured such that a refractive index along a vertical direction with respect to the plane of incidence of the light guide plate is relatively small and a refractive index along a parallel direction with respect to the plane of incidence is large compared to the relatively small refractive index. The light sources are light-emitting diode chips and are fixed to the optically anisotropic member.

## Description

### BACKGROUND OF THE INVENTION

### 1. Field of the Invention

The present invention relates to a thin display device such as a liquid crystal television, and particularly to a thin display device in which light entry efficiency and non-uniformity of luminance of the light guide plate are economically improved.

### 2. Description of the Related Art

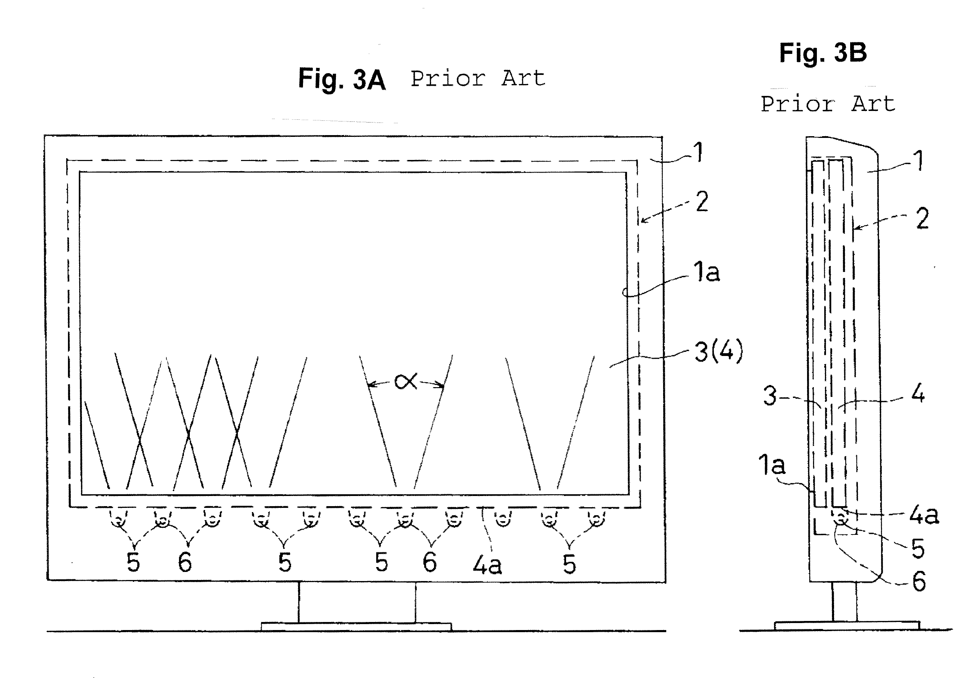

One example of a conventional thin display device is shown in FIGS. 3A and 3B. The conventional thin display device shown in FIGS. 3A and 3B is a liquid crystal television in which a thin display part 2 disposed inside a cabinet 1 has a liquid crystal module 3 that is faces the opening part 1a of the cabinet 1 and a light guide plate 4 for illuminating the liquid crystal module 3 from the rear, and a plurality of light sources 5 are arranged at specified intervals so as to face the plane of incidence 4a of this light guide plate 4. Note that 6 constitutes reflective plates.

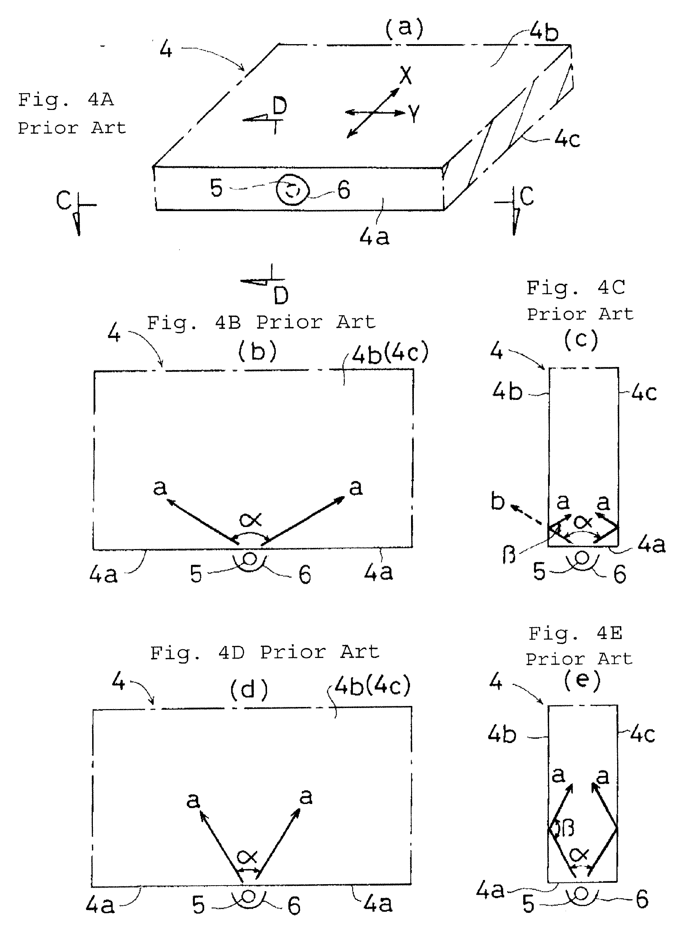

As shown in FIGS. 4A-4E, the aforementioned light guide plate 4 is composed of a transparent synthetic resin (such as acrylic resin and polycarbonate) in which the refractive index is the same between the vertical direction X and the parallel direction Y with respect to the plane of incidence 4a, and light ***a*** from each of the light sources 5 that has passed through the plane of incidence 4a is refracted and diffused at a specified angle of diffusion α. Note that there is an invention described in Japanese Patent Application Laid-Open Publication No. 2006-202703 as a related technology.

With the aforementioned conventional configuration, in cases where a material with a large refractive index is used in the light guide plate 4, a larger angle of diffusion α, of the light ***a*** along the parallel direction Y can be obtained as shown in FIG. 4B, so there is an advantage in that a small number of the light sources 5 is sufficient, which is economical. In the vertical direction X, however, the angle of reflection β of the light ***a*** with respect to the front surface 4b and rear surface 4c of the light guide plate 4 is an acute angle as shown in FIG. 4C that causes light ***b*** to leak from the front surface 4b toward the liquid crystal module 3, which tends to cause non-uniformity of luminance.

Furthermore, in cases where a material with a small refractive index is used in the light guide plate 4, in the vertical direction X, the angle of reflection β of the light ***a*** with respect to the front surface 4b and rear surface 4c of the light guide plate 4 becomes an obtuse angle as shown in FIG. 4E, which eliminates leaking of the light ***a*** from the front surface 4b, so there is an advantage in that light reflection efficiency can be improved. However, the angle of diffusion α of the light ***a*** along the parallel direction Y becomes narrow as shown in FIG. 4D, which creates a need to increase the number of the light sources 5 corresponding to the degree of narrowing, and this increases the cost.

Moreover, the light sources 5 are separated from the plane of incidence 4a, so there is air space between these light sources 5 and the plane of incidence 4a. Therefore, the light ***a*** emitted from the light sources 5 is reflected by the plane of incidence 4a, causing Fresnel loss to occur, so there is a disadvantage in that light entry efficiency is worsened.

### SUMMARY OF THE INVENTION

Preferred embodiments of the present invention were devised in light of the aforementioned drawbacks of the conventional technology, and preferred embodiments of the present invention provide a thin display device in which the light entry efficiency and non-uniformity of luminance of the light guide plate are economically improved.

According to a preferred embodiment of the present invention, a thin display device includes a thin display element disposed inside a cabinet and including a liquid crystal module that faces an opening portion of the cabinet and a light guide plate arranged to illuminate the liquid crystal module from the rear, a plurality of light sources arranged at specified intervals so as to face a plane of incidence of the light guide plate, the light guide plate is arranged to be illuminated with light from the light sources passing through the plane of incidence of the light guide plate, and an optically anisotropic member is disposed on the plane of incidence, wherein a refractive index along a vertical direction with respect to the plane of incidence of the light guide plate has a first value and the refractive index along the parallel direction with respect to the plane of incidence has a second value that is larger than the first value.

The light sources preferably are light-emitting diode chips, and the light-emitting diode chips are fixed to the optically anisotropic member.

As a result of a material with a large refractive index being used in the light guide plate, the refractive index along the parallel direction of the optically anisotropic member disposed on the plane of incidence of the light guide plate is a relatively large value. Therefore, it is possible to maintain "as is" an advantage that a large angle of diffusion of the light along the parallel direction of the light guide plate can be obtained, so that the number of the light sources that are required can be small, which is economical. Furthermore, the refractive index along the vertical direction of the optically anisotropic member is small, so the angle of reflection of the light with respect to the front surface and rear surface of the light guide plate becomes large. Therefore, leaking of light from the front surface of the light guide plate is prevented, so the light reflection efficiency is improved, thus making it possible to improve non-uniformity of luminance to a great extent.

In essence, with the use of the optically anisotropic member, the advantage of the light guide plate having a large refractive index is utilized "as is," and the drawbacks thereof are eliminated.

In addition, because there is preferably no air space between the light-emitting diode chips and the optically anisotropic member, light emitted from the light-emitting diode chips passes through the optically anisotropic member "as is" and is diffused within the light guide plate, so it is possible to eliminate the occurrence of Fresnel loss seen in the past and to significantly ameliorate the light entry efficiency.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1A is a front view of a thin display device according to a preferred embodiment of the present invention, and FIG. 1B is a side view of the thin display device shown in Fig. 1A.

FIG. 2A is a perspective view of principal portions of the thin display device shown in Fig. 1A, FIG. 2B is a cross-sectional view along line A-A, and FIG. 2C is a cross-sectional view along line B-B.

FIG. 3A is a front view showing a conventional example, and FIG. 3B is a side view of the conventional example shown in Fig. 3A.

FIG. 4A is a perspective view of principal portions of the conventional example shown in Fig. 3A, FIG. 4B is a front view showing one conventional example along line C-C, FIG. 4C is a side view showing the one conventional example along line D-D, FIG. 4D is a front view showing an additional conventional example along line C-C, and FIG. 4E is a side view showing the additional conventional example along line D-D.

### DETAILED DESCRIPTION OF THE PREFERRED EMBODIMENTS

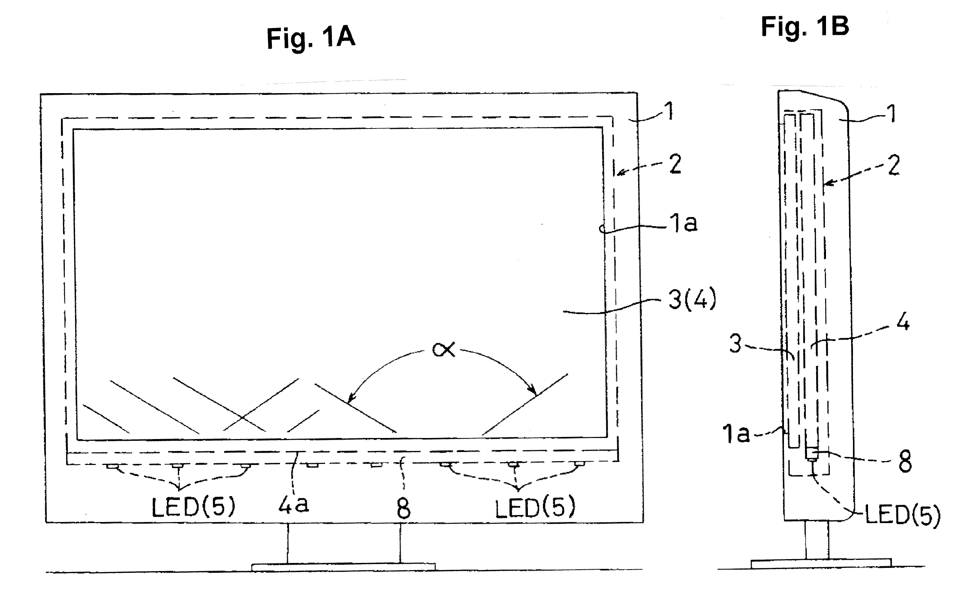

FIGS. 1A-2C show a thin display device according to a preferred embodiment of the present invention, which preferably is a liquid crystal television. In the thin display device according to the present preferred embodiment, an optically anisotropic member 8 is disposed on a plane of incidence 4a of a light guide plate 4, and light-emitting diode chips LED are used as the light source 5. Note that 9 is a substrate that supports the light-emitting diode chips LED. The configuration other than described above is almost the same as the configuration shown in FIGS. 3A-4E, so the same symbols are assigned to the same elements, and the description thereof will be omitted.

The light guide plate 4 is preferably made of a transparent synthetic resin (such as acrylic resin and polycarbonate) in which the refractive index is the same between the vertical direction X and the parallel direction Y with respect to the plane of incidence 4a, and a material with a relatively large refractive index (e.g., 1.5) is preferably used in this preferred embodiment.

The optically anisotropic member 8 is preferably composed of a transparent synthetic resin (such as polyethylene terephthalate (PET) and polyethylene naphthalate (PEN)) in which the refractive index along the vertical direction X with respect to the plane of incidence 4a is small, while the refractive index along the parallel direction Y with respect to this plane of incidence 4a is large, and in this preferred embodiment, a material is preferably used in which the refractive index in the vertical direction X is 1.0, while the refractive index in the parallel direction Y is 1.5, for example.

The optically anisotropic member 8 is fixed to the plane of incidence 4a of the light guide plate 4 preferably by an acrylic-based transparent resin adhesive having a refractive index close to that of the light guide plate 4, and the light-emitting diode chips LED are also similarly fixed to the optically anisotropic member 8.

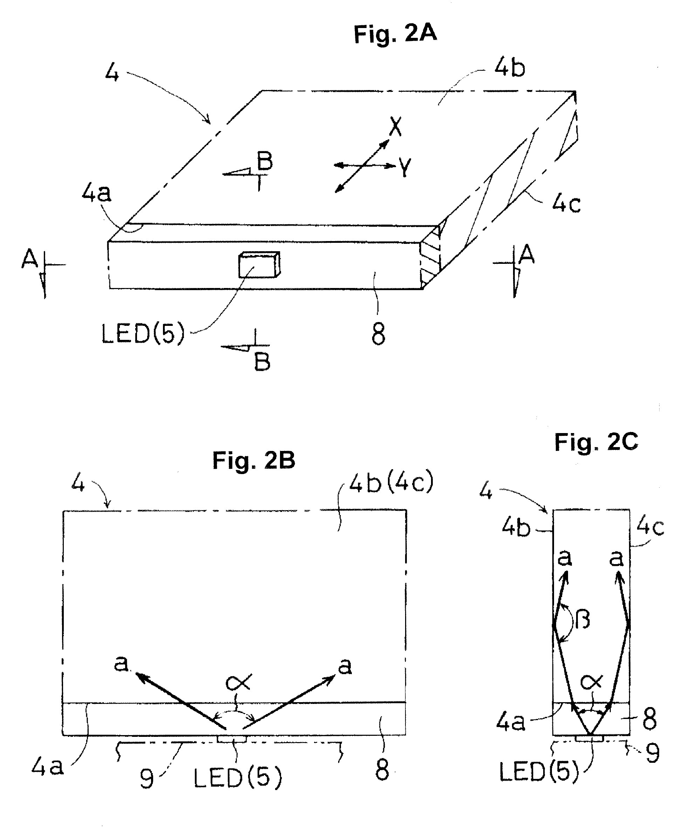

To describe the procedure for illuminating the light guide plate 4, light ***a*** from the light-emitting diode chips LED passes within the optically anisotropic member 8 with a large refractive index (e.g., 1.5) along the parallel direction Y, after which this light ***a*** passes linearly in the same direction within the light guide plate 4 with a similarly large refractive index (e.g., 1.5) and is diffused at a large angle of diffusion α as shown in FIG. 2B.

As is shown in FIG. 2C, the light ***a*** from the light-emitting diode chips LED passes within the optically anisotropic member 8 with a small refractive index (e.g., 1.0) along the vertical direction X, so this light ***a*** enters within the light guide plate 4 and is reflected by the front surface 4b and rear surface 4c of the light guide plate 4 at a large angle of reflection β, and this light ***a*** is repeatedly reflected and diffused within the light guide plate 4 without generating leakage light b (see FIG. 4C).

With the aforementioned configuration, a material with a relatively large refractive index is preferably used as the light guide plate 4, and the refractive index of the optically anisotropic member 8 disposed on the plane of incidence 4a of the light guide plate 4 along the parallel direction Y is relatively large, so it is possible to maintain "as is" the advantage that a larger angle of diffusion α of the light ***a*** along the parallel direction Y of the light guide plate 4 can be obtained, so the number of the light-emitting diode chips LED that are required is small, which is economical. Furthermore, the refractive index of the optically anisotropic member 8 along the vertical direction X is small, so the angle of reflection β of the light ***a*** with respect to the front surface 4a and rear surface 4b of the light guide plate 4 becomes large, which eliminates leaking of the light ***a*** from the front surface 4a of the light guide plate 4, and the light reflection efficiency is improved, thus making it possible to improve the non-uniformity of luminance to a great extent.

In essence, as a result of the use of the optically anisotropic member 8, the advantage of the light guide plate 4 having a large refractive index is utilized, and the drawbacks thereof are eliminated.

Because there is no air space between the light-emitting diode chips LED and the optically anisotropic member 8, the light emitted from these light-emitting diode chips LED passes through the optically anisotropic member 8 "as is" and is diffused within the light guide plate 4. Therefore, it is possible to eliminate the occurrence of Fresnel loss as that seen in the past and to significantly improve the light entry efficiency.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A display device comprising:
a display element disposed inside a cabinet and including a liquid crystal module that faces an opening portion of the cabinet and a light guide plate arranged to illuminate the liquid crystal module from behind;
a plurality of light sources arranged at specified intervals so as to face a plane of incidence of the light guide plate such that the light guide plate is illuminated with light from the light sources passing through the plane of incidence of the light guide plate; and
an optically anisotropic member disposed on the plane of incidence of the light guide plate; wherein
a refractive index along a vertical direction with respect to the plane of incidence of the light guide plate has a first value and a refractive index along a parallel direction with respect to the plane of incidence has a second value that is larger than the first value.

2. The display device according to claim 1, wherein the light sources are light-emitting diode chips.

3. The display device according to claim 2, wherein the light-emitting diode chips are fixed to the optically anisotropic member such that there is no space between the light-emitting diode chips and the optically anisotropic member.

4. The display device according to claim 1, wherein the optically anisotropic member is made of a transparent synthetic resin.

5. The display device according to claim 1, wherein the light guide plate is made of a transparent synthetic resin in which a refractive index is the same between the vertical direction and the parallel direction with respect to the plane of incidence.

6. The display device according to claim 1, wherein a refractive index of the light guide plate is substantially equal to the second value.

7. The display device according to claim 1, wherein the first value is 1.0 and the second value is 1.5.
